# EUROPEAN PATENT SPECIFICATION

(11) **EP 3 705 783 B1**
(45) Date of publication and mention of the grant of the patent: **17.04.2024**
(21) Application number: 20154714.8
(22) Date of filing: 30.01.2020
(51) Int. Cl.: F24C 15/20, H04L 12/28

(54) **SYSTEM FOR CONTROLLING AND MONITORING DEVICES, PLANTS AND/OR DOMESTIC CIRCUITS AND OPERATION METHOD THEREOF**
SYSTEM ZUR STEUERUNG UND ÜBERWACHUNG VON VORRICHTUNGEN, ANLAGEN UND/ODER SCHALTUNGEN FÜR DEN HAUSHALT UND BETRIEBSVERFAHREN DAFÜR
SYSTÈME DE COMMANDE ET DE SURVEILLANCE DE DISPOSITIFS, INSTALLATIONS ET/OU CIRCUITS DOMESTIQUES ET SON PROCÉDÉ DE FONCTIONNEMENT

(30) Priority: 07.03.2019 IT 201900003319
(43) Date of publication of application: 09.09.2020
(73) Proprietor: Joule 4.0 Srl, 20123 Milano (IT)
(72) Inventor: IMPARATO, Alessandro, 20123 Milano (IT); SPADA, Alessandra, 20123 Milano (IT); PIRAS, Marco, 20123 Milano (IT); LALATTA COSTERBOSA, Cecilia, 20123 Milano (IT); VANNINI, Gualberto, 20123 Milano (IT); CODICÈ, Francesco, 20123 Milano (IT)
(74) Representative: Tiburzi, Andrea

(56) References cited:
- EP-A1- 1 222 728
- EP-A1- 2 475 105
- EP-A1- 3 136 363
- EP-B1- 1 222 728

## Description

The present invention relates to a system for controlling and monitoring domestic devices, in particular household appliances, electric, water, heating plants and any type of consumption plant or circuit or device present in an environment.

The present invention also relates to the operation method of the system.

In more detail, the invention relates to a system of said type, designed and made in particular for controlling and monitoring domestic devices capable of actively interacting with a user, but which can be used for any plant or circuit or device present in a restricted environment which involve the consumption of energy resources, electricity, heat, water, or for which it is necessary to assess and quantify consumption, at the specific request of a user.

The following description will refer to a system used in a domestic environment capable of interacting with a user but it is very clear that the same system must not be considered limited to this specific use.

As is well known there are currently semi-automatic systems and devices controllable by voice command and/or manually. For example there are thermostats provided with artificial intelligence programs capable of detecting the physical parameters of an environment in a period of time, and of acting autonomously to adjust the heating plant.

There are also prior art devices for controlling and monitoring the state of operation of household appliances present in a domestic environment.

There are also prior art devices for the reproduction of audio-visual multimedia resources operable remotely at the request of a user.

The existence of a variety of devices used in different fields seems evident, which often causes limitation of the functions of the product to specific fields through proprietary solutions.

The prior art devices for detecting and monitoring energy consumption may be capable of controlling systems through the interaction of the user, but without archiving the data acquired.

The relevant prior art includes also the patent application EP 3136363 A1. Therefore, in light of the above, the aim of the present invention is to supply a system for controlling and monitoring energy which performs a technical analysis of all of the devices and/or plants present in a domestic environment, capable of interacting with a user on request.

Another aim of the invention is to archive, store and historicize the data detected both by direct monitoring of the energy or consumption plants, devices or circuit, and by monitoring devices, already existing on the reference markets, positioned in the domestic environments, which interact with and control the consumption plants, devices or circuits.

Yet another aim of the invention is to process the data collected by the system through artificial intelligence algorithms, so as to supply predictions and estimates of future energy consumption, and if necessary to directly control the devices in order to achieve an energy saving and to improve the usability by the user.

A further aim of the present invention is to supply an operation method of the system described above.

The invention is directed to the system of claim 1 and the method of claim 9.

The invention is now described, by way of example and without limiting the scope of the invention, with reference to the accompanying drawings which illustrate preferred embodiments of it, in which:
Figure 1 shows a block diagram of the components of the system for controlling and monitoring devices, plants or domestic circuits, which is the object of the present invention;

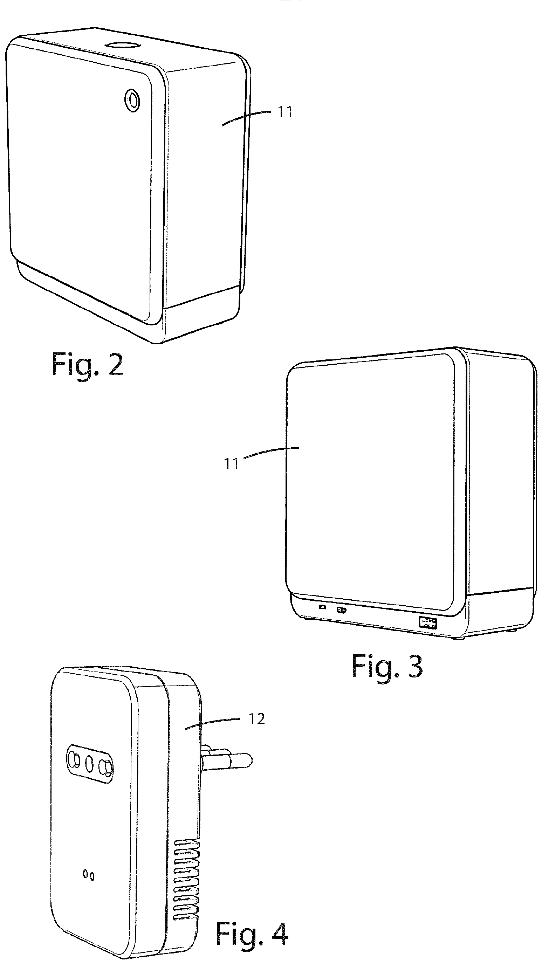

Figure 2 shows a perspective side view of a device included in the system which is the object of the present invention;
Figure 3 shows a perspective rear side view of the device of Figure 2;
Figure 4 shows a perspective side view of a further device included in the system which is the object of the present invention;
Figure 5 shows a perspective side view of the device shown in Figure 2, coupled to a base;
Figure 6 shows a further perspective side view of the device shown in Figure 2, coupled to a wall-mounted support;

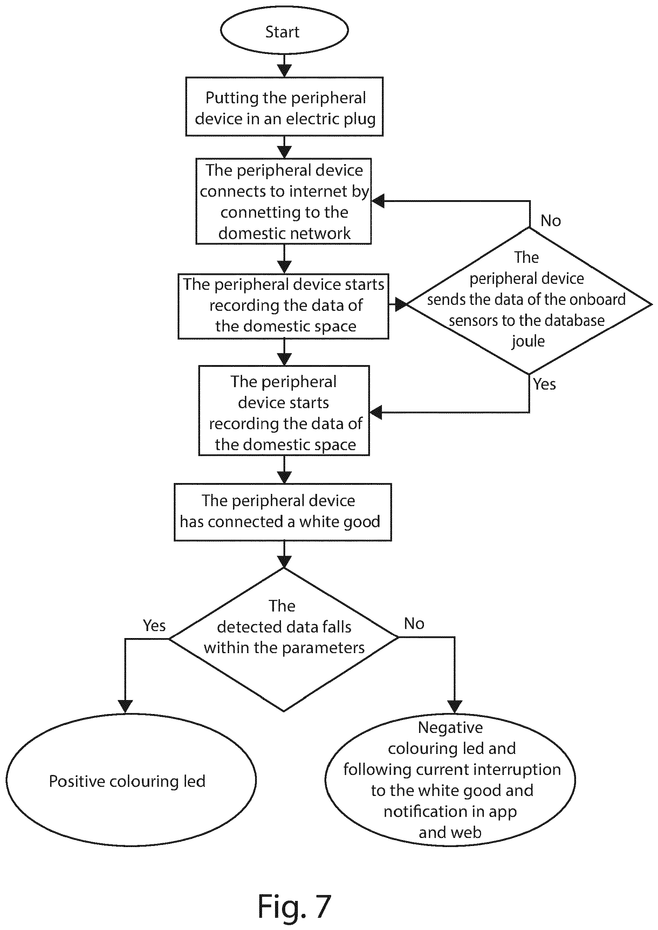

Figure 7 shows a block diagram of the operation method of the system which is the object of the present invention; and

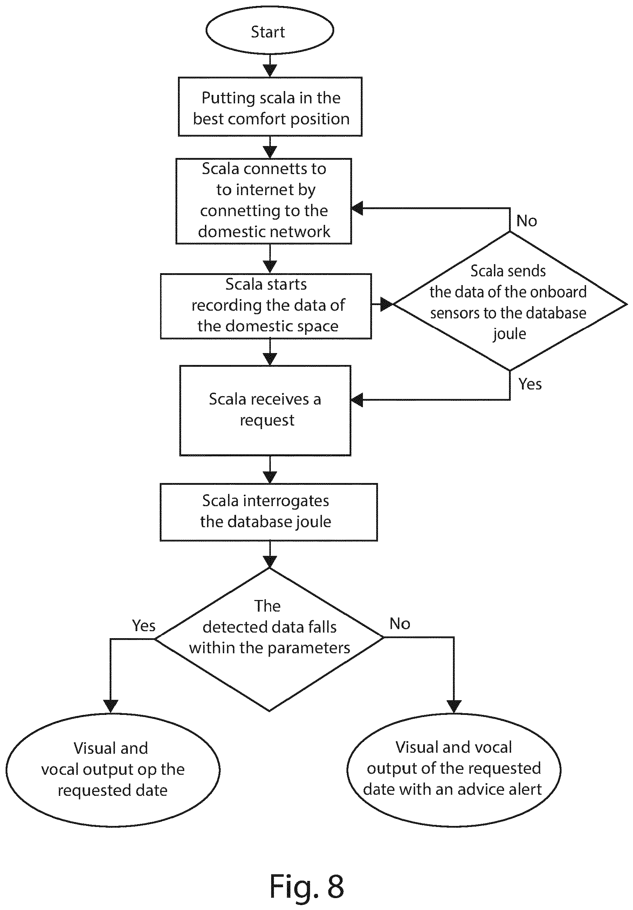

Figure 8 shows a block diagram of the operation method of the device shown in Figure 4.

The similar parts will be indicated in the various drawings with the same numerical references.

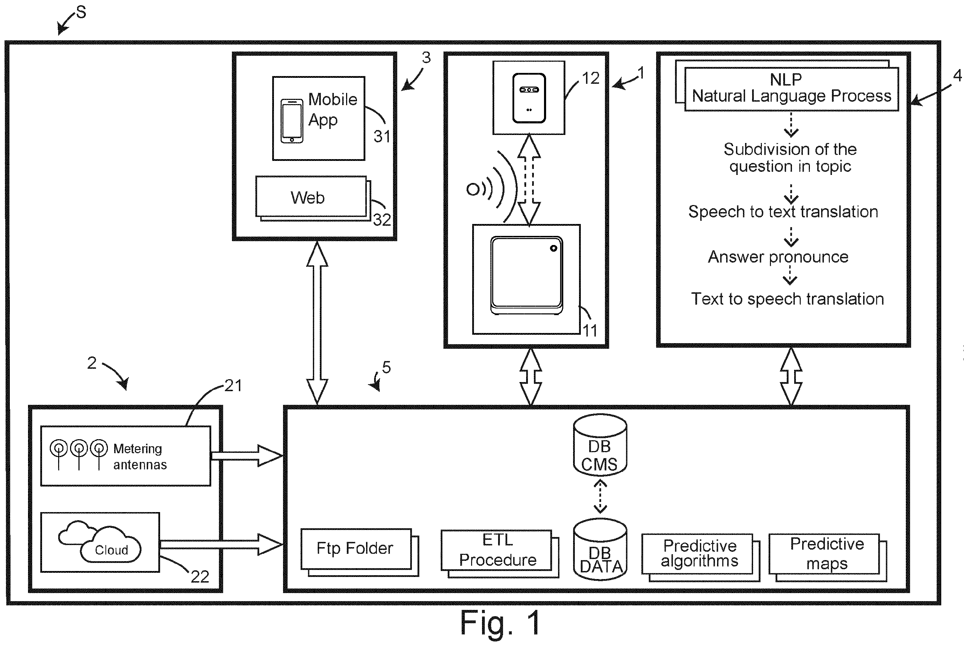

With reference to Figure 1, the system S for controlling and monitoring devices, plants and/or domestic circuits which is the object of the present invention uses devices which perceive the environment through the use of sensors, and is capable of acting on the environment through the use of actuators.

The system S basically comprises: a data detection module 1, for detecting data, a data monitoring module 2, a user interface module 3, a voice interaction module 4 for interacting with the user, and a logic control unit 5 for processing data.

In particular, the data detection module 1 can interface with said voice interaction module 4 and logic control unit 5.

Said data detection module 1 comprises a central device 11 and a plurality of peripheral devices 121,2,...,k,...n, whose number is equal to the number of circuits, plants or devices to be monitored in a particular environment, which may be a domestic environment or a company or external environment.

Said central device 11 allows the user energy management of the devices, plants and/or circuits present in a particular domestic environment.

Said central device 11 is an loT - Internet of things type device for "smart metering", that is to say, prior art devices for remote reading and remote management of electricity, gas and water meters.

Said central device 11 is provided with a plurality of sensors for detecting temperature, humidity, movement, harmful gases according to the environment in which the system S is installed, such as CO2, NH4, CO.

Said central device 11 is capable of acquiring and storing said detected data and of interfacing, through wireless type protocols, with said plurality of peripheral devices 121,2,.,k,.n and with said voice interaction module 4.

Said central device 11 is also capable of interfacing with the domestic internet network and with external databases containing consumption data of the devices and any warnings or indications relating to those same devices, and with further loT type devices for monitoring and recording video, present in the same environment, by means of Wi-Fi protocols, or Bluetooth^{®} Low Energy (BLE), or Universal Serial Bus (USB) cable, or by means of direct electrical connection, these ways being present individually or simultaneously or in groups.

Said central device 11 receives data updated in real time from said plurality of peripheral devices 121,2,...,k,...n, and sends them to an external database or platform, capable of metering, processing and historicizing consumption.

Said central device 11 is provided with an internal microphone, not shown in the figures, which is controlled by said voice module 4, with a proximity/presence sensor and with a video camera which are arranged in the front part of said central device 11 and with a display.

Therefore, said central device 11 may be activated both by means of a voice command given by a user which is received by said internal microphone, or by means of said proximity/presence sensor and video camera which detect the presence of the user.

Following activation, said central device 11 is capable of interacting with the user, both by means of said microphone, controlled by said voice module 4, and by means of data sent from said voice module 4 to said central device 11 and displayed on said display.

Said voice module 4 is a program which converts the human language into machine language and vice versa and externally returns the data processed by means of said microphone.

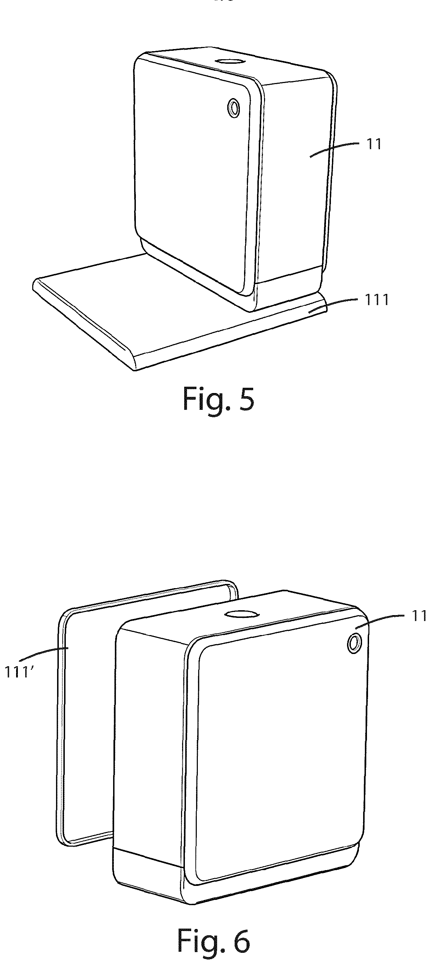

Said central device 11 is directly connected to the electricity network present in the domestic environment, may be positioned on a flat surface or be coupled to a base 111 of its own, prepared for inductive charging for other consumer electronic devices, as shown in Figure 5.

Alternatively, said central device 11 may also be installed wall-mounted by means of a dedicated vertical support 111', as shown in Figure 6.

Each device 12k of said plurality of peripheral devices 121,2, .. .,k,.. .n is provided with a plurality of sensors for detecting flooding, current, temperature, humidity, harmful gases according to the environment in which the system S is installed, such as CO2, NH4, CO.

Each device 12k of said plurality of peripheral devices 121,2, .,k,.n is remotely associated with or is coupled to a device or circuit or plant present in the domestic environment, for measuring the current drawn in said device or circuit or plant and controls its electric power supply by means of a relay. As previously described, each device 12k is provided with a sensor or current meter and with a local logic unit.

Said local logic unit stores in the memory the typical current data of each device or circuit or plant to be monitored with which each peripheral device is associated.

Following acquisition of the current data by the current meter, said local logic unit performs a comparison between the data coming from the current meter and those stored.

If the current data detected by the current meter are higher than those stored, the local logic unit of the peripheral device 12k acts on the relay to interrupt the current flow and sends the alarm/notification to said central device 11.

Similarly, if the peripheral device 12k is equipped with the flooding sensor which detects a fault, the local logic unit acts on the relay interrupting the current passage, at the same time sending the flooding alarm to said central device 11.

Each device 12k is directly connected to the electric current through the outlets of the electrical plant of the domestic environment and can be installed wall-mounted.

Said data monitoring module 2 comprises a plurality of metering devices 211,2,.k,.n which are prior art metering devices of user devices and a cloud 22.

In particular, they are heat metering devices, rendered mandatory in condominiums and in multi-function buildings, pursuant to technical standard UNI 10200 updated to version 2018.

Based on the type of the individual metering device 21k, the detected data may be automatically sent to the cloud 22 by means of GSM network.

Said user interface module 3 comprises software applications which allow the user to display the data by means of readable graphics, in particular it comprises a mobile application 31 and a website 32.

Said user interface module 3 is both wearable by the user and installable in mobile devices such as telephones and allows information relating to consumption to be received, by means of user registration or an account.

Said voice interaction module 4 is a voice query module of the system S which returns the data and information requested by means of voice responses and/or graphics on said user interface module 3.

Said voice interaction module 4 is provided with a prior art voice interpretation algorithm of the NLP (Natural Language Process) type for formulating the response and voice return and is capable of supplying a voice interaction with the user.

All of the data detected by said central device 11, plurality of peripheral devices 121,2,...,k,...n and plurality of metering devices 211,2,...k,...n, are automatically or manually sent to the cloud 22 which exchanges data in its turn with said logic control unit 5.

This stores and processes the data collected, and sends the report to said interface module 3.

The operation of the system S described above is as follows.

In operation, said data detection module 1 begins detecting the consumption data of the devices or circuits or plants present in the environment to be monitored.

In particular, each peripheral device 12k detects the consumption data, such as electricity, gas, water of the device or plant or circuit to which it is connected, and humidity and the like and sends them to said central device 11.

At the same time, each metering device 21k detects the consumption data, such as electricity, gas and water of the device or plant or circuit to which it is connected and sends them to the cloud 22.

Said central device 11, as well as itself detecting the humidity and temperature data, receives said consumption data detected by each peripheral device 12k and sends all of the data to said logic control unit 5 by means of the domestic internet network.

Said central device 11 interacts with the user by means of said internal microphone and said voice module, to make known the data collected by said central device 11, plurality of peripheral devices 121,2,...,k,...n and plurality of metering devices 211,2,...k,...n.

Said logic control unit 5 receives all of the data sent by said central device 11, stores them and compares them with the range of data complying with the limit values which are set by the safety standards for domestic environments, or with the guide values which are set by the user.

If the values recorded by said plurality of peripheral devices 121,2, .,k,.n do not fall within the above-mentioned range, the logic control unit 5 will perform the following operations.

It sends a notification to said mobile application 31 and to the website 32, it sends a voice alert to said central device 11 by means of said voice module 4, moreover it requests that said central device 11 activates a light feedback on the peripheral device 12k in question.

Said plurality of peripheral devices 121,2, .,k,.n is also capable of acting autonomously, activating the light alarm feedback when the data recorded are outside the range as in the case of fire or flooding, acting on the relay to interrupt the current flow, therefore without passing through the domestic internet network.

In both cases it is the user who, alerted in the above-mentioned ways, will be able to physically intervene on the devices, circuits or plants connected to said plurality of peripheral devices 121,2,.,k,.n, switching them off or disconnecting them from the electricity network, or disconnecting them through the commands in the mobile application 31 or on the website 32. The user will also be able to check, by means of said mobile application 31 and website 32, the action autonomously performed by said peripheral devices 121,2,.,k,.n.

Said system S is equipped with artificial intelligence algorithms which process the data acquired and are capable of acting rationally on the system S itself, thereby determining its intelligence, through reading of the data, their division, classification and processing.

The processing of the data acquired relates to the search for sequences of actions which reach a desired state, in the specific case environmental comfort for the user and reference plant energy saving.

In particular, the algorithm used is trained on and with historical consumption and environmental data correlated with the detection timing. Artificial intelligence for predicting consumption uses various prediction models, selecting the best for each specific environment.

The prior art statistical technique of cross-validation is used for assessing the effectiveness of the models on the individual environment.

In particular this technique consists of dividing the entire data set into k parts of equal numbers and, at each step, the k-th part of the data set is used as the validation data set, whilst the remaining part of the data is what the training data set consists of.

In this way, the model is trained for each of the k parts of data.

In other words, the sample observed is divided into groups of equal numbers, one group at a time is iteratively excluded and an attempt to predict it is made with the groups not excluded.

Therefore, the i-th training is performed using as training data the starting data set, subtracting the data contained in the i-th part.

The performance is calculated by assessing the good quality of the prediction on the part of data not contained in the training data; the final performance is then given by the average of the performances on each part of the data.

The model with the highest average of the performances is that which is selected for the prediction on the environment in question.

The models considered for this assessment are based on the following algorithms:
- Polynomial Support Vector Machine;
- Radial Support Vector Machine;
- Lasso Regression;
- Ridge Regression;
- Partial Least Square Regression;
- Random Forest.

The system for controlling and monitoring devices, plants or circuits described above has the advantage of returning the consumption by means of a dedicated platform, constantly informing and helping the user to optimise their domestic consumption, sensitising them to energy saving.

The system allows execution of a prediction analysis of future consumptions, giving the user the advantage of being able to plan their behaviour relative to management of the domestic consumptions and indicating abnormal consumptions, with the consequent emitting of alarms. By means of applications and wearable devices, the system offers
mobile support for displaying one's own consumptions and the returning of real time alerts and, if the predetermined consumption thresholds are exceeded or there is a data item anomaly, the possibility for the user to intervene with interruption of the electric current in the devices, circuits or plants connected with said plurality of peripheral devices 121,2,...,k,...n, or in
extreme cases, of assessing actions following fire or flooding.

The present invention has been described by way of example, but without limiting the scope of the invention, according to the preferred embodiments of it, but it shall be understood that it may be modified and/or adapted by experts in the field without thereby departing from the related protective scope, as defined by the appended claims.

## Claims

1. System (S) for controlling and monitoring devices, plants and/or circuits arranged in domestic environments comprising:
a logic control unit (5) adapted to store ranges of consumption data of said devices, plants and/or circuits, complying with operating safety standards, and/or ranges of consumption data of said devices, plants and/or circuits predetermined by a user,
at least one data detection module (1), to be placed in said domestic environments, for detecting consumption data of said devices, plants and/or circuits and for sending them to said logic control unit (5), and
a plurality of peripheral devices (12i,2,..,k,..n),
said system (S) being **characterized**
**in that** said data detection module (1) comprises a central device (11) capable of detecting data of said domestic environment and sending them to said logic control unit (5), wherein said plurality of peripheral devices (12i,2,..,k,..n) are connectable to said devices, plants and/or circuits and connectable to said central device (11), capable of detecting environmental data and consumption data of said devices, plants and/or circuits and sending them to said central device (11), and
**in that** said control logic unit (5) is configured for
receiving said data sent by said central device (11), adapted for comparing them with said stored ranges of consumption data of said devices, plants, and/or circuits complying with operating safety standards, and/or ranges of consumption data of said devices, plants and/or circuits predetermined by a user,
emitting alarm signals if said data received from said central device (11) do not fall within said stored ranges of data, and
deactivating the operation of said devices, plants, and/or circuits if said data received from said central device (11) do not fall within said stored ranges of data.

2. System (S) according to the preceding claim, **characterized in that** said central device (11) is provided with a plurality of sensors adapted for detecting environmental temperature, humidity, movement, harmful gases according to the environment in which said system (S) is arranged , such as CO2, NH4 and CO.

3. System (S) according to any one of the preceding claims, **characterized in that** each device (12k) of said plurality of peripheral devices (12 i,2,...,k,...n) is provided with a plurality of sensors for detecting environmental data, such as flooding, temperature, humidity, harmful gases according to the environment in which said system (S) is arranged, such as CO2, NH4, CO and current.

4. System (S) according to any one of the preceding claims, **characterized**
**in that** it comprises a voice interaction module (4), adapted for interacting with the user,
**in that** said central device (11) is provided with an internal microphone operable by said voice interaction module (4), and a display,
**in that** said voice interaction module (4) can be connected to said logic control unit (5), and
**in that** the said alarm signals emitted by said logic control unit (5) are sent to said voice interaction module (4) and to said display.

5. System (S) according to any one of the preceding claims, **characterized in that** said central device (11) comprises a proximity and/or presence sensor and a video camera for contactless activation by a user.

6. System (S) according to any one of the preceding claims, **characterized**
**in that** each peripheral device (12k) is adapted to be connected to a respective device, plant and/or circuit and it is configured to control the switching on or off of said respective device, system and/or circuit to which it is connected,
**in that** each peripheral device (12k) comprises a current meter and a local control logic unit in which the typical current data of the device, plant and/or circuit to which it is connected is stored, and
**in that** said local logic unit is configured to compare the data coming from the current meter and those stored and to interrupt the current flow if the current data detected by the current meter are higher than those stored.

7. System (S) according to any one of the preceding claims, **characterized in that** it comprises a data monitoring module (2) comprising in its turn
a plurality of metering devices (21i,2,..k,-n), each adapted to be connected to a device, plant and/or circuit, capable of detecting consumption data, such as electricity, gas and water of the device or plant or circuit to which it is connected, and
a cloud (22) adapted to be connected to said plurality of metering devices (21i,2,..k,..n) to receive said consumption data.

8. System (S) according to any one of the preceding claims, **characterized in that** it comprises a user interface module (3) comprising in its turn a mobile application (31) and a website (32), capable of exchanging data with said logic control unit (5).

9. Operation method of a system (S) for controlling and monitoring devices, plants and/or circuits arranged in domestic environments, the system according to any one of the preceding claims 1-8, comprising the following steps:
detecting, by means of said logic control unit (5), the consumption data, such as current, of said devices, plant and/or circuits,
measuring, by means of said logic control unit (5), the consumption data, such as current, of said devices, plant and/or circuits,
comparing, by means of said logic control unit (5), said detected data with ranges of consumption data of said devices, plants and/or circuits complying with operating safety standards, and/or ranges of consumption data of said devices, plants and/or circuits predetermined by a user,
if said measured data don't fall within said ranges, emitting alarm signals and deactivating the operation of said devices, plants and/or circuits, and providing such data to a user.

## Patentansprüche

1. System (S) zur Steuerung und Überwachung von Vorrichtungen, Anlagen und/oder Schaltungen, die in häuslicher Umgebung angeordnet sind, umfassend:
eine logische Steuereinheit (5), die angepasst ist, um Bereiche von Verbrauchsdaten der Vorrichtungen, Anlagen und/oder Schaltungen zu speichern, die den Betriebssicherheitsstandards entsprechen, und/oder mit Bereichen von Verbrauchsdaten der Vorrichtungen, Anlagen und/oder Schaltungen, die von einem Benutzer vorbestimmt werden,
mindestens ein Datenerfassungsmodul (1), das in den häuslichen Umgebungen zu platzieren ist, um Verbrauchsdaten der Vorrichtungen, Anlagen und/oder Schaltungen zu erfassen und sie an die logische Steuereinheit (5) zu senden, und
eine Vielzahl von Peripheren Vorrichtungen (12i,2,...,k,...n),
wobei das System (S) **dadurch gekennzeichnet ist,**
**dass** das Datenerfassungsmodul (1) eine zentrale Vorrichtung (11) umfasst, die in der Lage ist, Daten der häuslichen Umgebung zu erfassen und sie an die logische Steuereinheit (5) zu senden, wobei die Vielzahl von peripheren Vorrichtungen (12i,2,...,k,...n) mit den Vorrichtungen, Anlagen und/oder Schaltungen verbunden werden können und mit der zentralen Vorrichtung (11) verbunden werden können und in der Lage sind, Umgebungsdaten und Verbrauchsdaten der Vorrichtungen, Anlagen und/oder Schaltungen zu erfassen und sie an die zentrale Vorrichtung (11) zu senden, und
dadurch, dass die logische Steuereinheit (5) zu Folgendem konfiguriert ist
empfangen der von der zentralen Vorrichtung (11) gesendeten Daten, die angepasst sind, sie mit den gespeicherten Bereichen von Verbrauchsdaten der Vorrichtungen, Anlagen und/oder Schaltungen, die den Betriebssicherheitsstandards entsprechen, und/oder mit von einem Benutzer vorgegebenen Bereichen von Verbrauchsdaten der Vorrichtungen, Anlagen und/oder Schaltungen zu vergleichen, ausgeben von Alarmsignalen, wenn die von der zentralen Vorrichtung (11) empfangenen Daten nicht in die gespeicherten Datenbereiche fallen, und
deaktivieren des Betriebs der Vorrichtungen, Anlagen und/oder Schaltungen, wenn die von der zentralen Vorrichtung (11) empfangenen Daten nicht in die gespeicherten Datenbereiche fallen.

2. System (S) nach dem vorherigen Anspruch, **dadurch gekennzeichnet, dass** die zentrale Vorrichtung (11) mit einer Vielzahl von Sensoren ausgestattet ist, die angepasst sind, um Umgebungstemperatur, Feuchtigkeit, Bewegung, schädliche Gase entsprechend der Umgebung, in der das System (S) angeordnet ist, wie beispielsweise CO2, NH4 und CO, zu erfassen.

3. System (S) nach einem der vorherigen Ansprüche, **dadurch gekennzeichnet, dass** jede Vorrichtung (12k) der Vielzahl von peripheren Vorrichtungen (12 i,2,...,k,...n) mit einer Vielzahl von Sensoren zum Erfassen von Umgebungsdaten, wie beispielsweise Überflutung, Temperatur, Feuchtigkeit, schädliche Gase entsprechend der Umgebung, in der das System (S) angeordnet ist, wie beispielsweise CO2, NH4, CO und Strom, versehen ist.

4. System (S) nach einem der vorherigen Ansprüche, **dadurch gekennzeichnet,**
**dass** es ein Sprachinteraktionsmodul (4) umfasst, das für die Interaktion mit dem Benutzer angepasst ist,
**dass** die zentrale Vorrichtung (11) mit einem internen Mikrofon, das von dem Sprachinteraktionsmodul (4) betrieben werden kann, und einer Anzeige ausgestattet ist,
**dass** das Sprachinteraktionsmodul (4) mit der logischen Steuereinheit (5) verbunden werden kann, und
**dass** die von der logischen Steuereinheit (5) ausgegebenen Alarmsignale an das Sprachinteraktionsmodul (4) und an die Anzeige gesendet werden.

5. System (S) nach einem der vorherigen Ansprüche, **dadurch gekennzeichnet, dass** die zentrale Vorrichtung (11) einen Näherungs- und/oder Anwesenheitssensor und eine Videokamera zur berührungslosen Aktivierung durch einen Benutzer umfasst.

6. System (S) nach einem der vorherigen Ansprüche, **dadurch gekennzeichnet**
**dass** jede periphere Vorrichtung (12k) angepasst ist, um mit einer jeweiligen Vorrichtung, Anlage und/oder Schaltung verbunden zu werden und konfiguriert ist, um das Ein- oder Ausschalten der jeweiligen Vorrichtung, Anlage und/oder Schaltung, mit der sie verbunden ist, zu steuern,
**dass** jede periphere Vorrichtung (12k) einen Stromzähler und eine lokale logische Steuereinheit umfasst, in der die typischen Stromdaten der Vorrichtung, Anlage und/oder Schaltung, mit der sie verbunden ist, gespeichert sind, und
**dass** die lokale logische Steuereinheit konfiguriert ist, um die von dem Stromzähler kommenden Daten mit den gespeicherten Daten zu vergleichen und den Stromfluss zu unterbrechen, wenn die von dem Stromzähler erfassten Stromdaten höher sind als jene, die gespeichert sind.

7. System (S) nach einem der vorherigen Ansprüche, **dadurch gekennzeichnet, dass** es ein Datenüberwachungsmodul (2) umfasst, seinerseits umfassend
eine Vielzahl von Messvorrichtungen (21i,2,...k,-n), die jeweils sind, um mit einer Vorrichtung, einer Anlage und/oder einer Schaltung verbunden zu werden und in der Lage sind, Verbrauchsdaten, wie beispielsweise Strom, Gas und Wasser der Vorrichtung oder der Anlage oder der Schaltung zu erfassen, mit der sie verbunden sind, und eine Cloud (22), die angepasst ist, um mit der Vielzahl von Messvorrichtungen (21i,2,..k,..n) verbunden zu werden, um die Verbrauchsdaten zu empfangen.

8. System (S) nach einem der vorherigen Ansprüche, **dadurch gekennzeichnet, dass** es ein Benutzerschnittstellenmodul (3) umfasst, seinerseits umfassend eine mobile Anwendung (31) und eine Website (32), die in der Lage sind, Daten mit der logischen Steuereinheit (5) auszutauschen.

9. Betriebsverfahren eines Systems (S) zum Steuern und Überwachen von Vorrichtungen, Anlagen und/oder Schaltungen, die in häuslicher Umgebung angeordnet sind, das System nach einem der vorherigen Ansprüche 1-8 umfassend die folgenden Schritte:
erfassen, durch die logische Steuereinheit (5), der Verbrauchsdaten, wie z.B. Strom, der Vorrichtungen, Anlagen und/oder Schaltungen,
messen, durch die logische Steuereinheit (5), der Verbrauchsdaten, wie z.B. Strom, der Vorrichtungen, Anlagen und/oder Schaltungen,
vergleichen, durch die logische Steuereinheit (5), der erfassten Daten mit Bereichen von Verbrauchsdaten der Vorrichtungen, Anlagen und/oder Schaltungen, die den Betriebssicherheitsstandards entsprechen, und/oder mit Bereichen von Verbrauchsdaten der Vorrichtungen, Anlagen und/oder Schaltungen, die von einem Benutzer vorbestimmt werden,
wenn die gemessenen Daten nicht in die genannten Bereiche fallen, Ausgeben von Alarmsignalen und Deaktivieren des Betriebs der Vorrichtungen, Anlagen und/oder Schaltungen und Bereitstellen dieser Daten an einen Benutzer.

## Revendications

1. Système (S) de contrôle et de surveillance de dispositifs, d'installations et/ou de circuits disposés dans des environnements domestiques comprenant:
une unité de commande logique (5) adaptée pour stocker des plages de données de consommation desdits dispositifs, installations et/ou circuits, conformes aux normes de sécurité de fonctionnement, et/ou des plages de données de consommation desdits dispositifs, installations et/ou circuits prédéterminées par un utilisateur,
au moins un module de détection de données (1), à placer dans lesdits environnements domestiques, pour détecter les données de consommation desdits dispositifs, installations et/ou circuits et pour les envoyer à ladite unité de commande logique (5), et
une pluralité de dispositifs périphériques (12i,2,...k,...n), ledit système (S) étant **caractérisé en ce que** le module de détection des données (1) comprend un dispositif central (11) capable de détecter les données de l'environnement domestique et de les envoyer à l'unité de commande logique (5), dans lequel plusieurs dispositifs périphériques (12i,2,...,k,...n) peuvent être connectés aux dispositifs, aux installations et/ou aux circuits et peuvent être connectés au dispositif central (11), capables de détecter les données environnementales et les données de consommation des dispositifs, des installations et/ou des circuits et de les envoyer au dispositif central (11), et
**en ce que** ladite unité logique de commande (5) est configurée pour
recevoir ces données envoyées par ledit dispositif central (11), adapté pour les comparer avec lesdites plages de données de consommation stockées desdits dispositifs, installations et/ou circuits conformes aux normes de sécurité de fonctionnement, et/ou les plages de données de consommation desdits dispositifs, installations et/ou circuits prédéterminées par un utilisateur,
émettre des signaux d'alarme si lesdites données reçues dudit dispositif central (11) ne se situent pas dans lesdites plages de données mémorisées, et
désactiver le fonctionnement desdits dispositifs, installations et/ou circuits si lesdites données reçues dudit dispositif central (11) ne se situent pas dans lesdites plages de données mémorisées.

2. Système (S) selon la revendication précédente, **caractérisé en ce que** ledit dispositif central (11) est pourvu d'une pluralité de capteurs adaptés à la détection de la température ambiante, de l'humidité, du mouvement, des gaz nocifs en fonction de l'environnement dans lequel ledit système (S) est disposé, tels que le CO2, le NH4 et le CO.

3. Système (S) selon l'une quelconque des revendications précédentes, **caractérisé en ce que** chaque dispositif (12k) de ladite pluralité de dispositifs périphériques (12i,2, ...,k, ...n) est pourvu d'une pluralité de capteurs pour la détection de données environnementales, telles que l'inondation, la température, l'humidité, les gaz nocifs selon l'environnement dans lequel ledit système (S) est disposé, tels que le CO2, le NH4, le CO et le courant.

4. Système (S) selon l'une quelconque des revendications précédentes, **caractérisé en ce qu'**il comprend un module d'interaction vocale (4), adapté pour interagir avec l'utilisateur,
**en ce que** ledit dispositif central (11) est pourvu d'un microphone interne utilisable par ledit module d'interaction vocale (4), et d'un écran,
**en ce que** ledit module d'interaction vocale (4) peut être connecté à ladite unité de contrôle logique (5), et **en ce que** lesdits signaux d'alarme émis par ladite unité de contrôle logique (5) sont envoyés audit module d'interaction vocale (4) et audit écran.

5. Système (S) selon l'une quelconque des revendications précédentes, **caractérisé en ce que** ledit dispositif central (11) comprend un capteur de proximité et/ou de présence et une caméra vidéo pour l'activation sans contact par un utilisateur.

6. Système (S) selon l'une quelconque des revendications précédentes, **caractérisé**
**en ce que** chaque dispositif périphérique (12k) est adapté pour être connecté à un dispositif, une installation et/ou un circuit respectif et qu'il est configuré pour commander la mise en marche ou l'arrêt dudit dispositif, de l'installation et/ou du circuit respectif auquel il est connecté,
**en ce que** chaque dispositif périphérique (12k) comprend un compteur de courant et une unité logique de commande locale dans laquelle sont stockées les données de courant typiques du dispositif, de l'installation et/ou du circuit auquel il est connecté, et
**en ce que** ladite unité logique locale est configurée pour comparer les données provenant du compteur de courant et celles qui sont stockées et pour interrompre le flux de courant si les données de courant détectées par le compteur de courant sont plus élevées que celles qui sont stockées.

7. Système (S) selon l'une quelconque des revendications précédentes, **caractérisé en ce qu'**il comprend un module de contrôle des données (2) comprenant à son tour
une pluralité de dispositifs de comptage (21i,2,..k,-n), chacun adapté pour être connecté à un dispositif, une installation et/ou un circuit, capable de détecter les données de consommation, telles que l'électricité, le gaz et l'eau du dispositif ou de l'installation ou du circuit auquel il est connecté, et
un nuage (22) adapté pour être connecté à ladite pluralité de dispositifs de comptage (21i,2,..k,..n) afin de recevoir lesdites données de consommation.

8. Système (S) selon l'une quelconque des revendications précédentes, **caractérisé en ce qu'**il comprend un module d'interface utilisateur (3) comprenant à son tour une application mobile (31) et un site web (32), capable d'échanger des données avec ladite unité de commande logique (5).

9. Procédé de fonctionnement d'un système (S) de contrôle et de surveillance de dispositifs, d'installations et/ou de circuits disposés dans des environnements domestiques, le système selon l'une quelconque des revendications précédentes 1-8, comprenant les étapes suivantes:
détecter, au moyen de l'unité de commande logique (5), les données de consommation, telles que le courant, de ces dispositifs, installations et/ou circuits,
mesurer, au moyen de l'unité de commande logique (5), les données de consommation, telles que le courant, de ces dispositifs, installations et/ou circuits, comparer, au moyen de l'unité de commande logique (5), les données détectées à des fourchettes de données de consommation desdits dispositifs, installations et/ou circuits conformes aux normes de sécurité de fonctionnement, et/ou à des fourchettes de données de consommation desdits dispositifs, installations et/ou circuits prédéterminées par un utilisateur,
si les données mesurées ne se situent pas dans ces plages, émettre des signaux d'alarme et désactiver le fonctionnement de ces dispositifs, installations et/ou circuits, et fournir ces données à un utilisateur.
